# FASCICULE DE BREVET EUROPEEN

(11) **EP 1 410 064 B1**
(45) Date de publication et mention de la délivrance du brevet: **24.11.2004**
(21) Numéro de dépôt: 02740704.8
(22) Date de dépôt: 11.06.2002
(51) Int. Cl.: G01S 11/06, B60C 23/04

(54) **PROCEDE DE LOCALISATION DE CAPTEURS MONTES CHACUN SUR UNE ROUE DE VEHICULE**
VERFAHREN ZUR ORTUNG VON AUF EIN FAHRZEUGRAD ANGEBRACHTEN SENSOREN
METHOD FOR LOCATING SENSORS MOUNTED EACH ON A VEHICLE WHEEL

(30) Priorité: 28.06.2001 FR 0108551
(43) Date de publication de la demande: 21.04.2004
(73) Titulaire: Siemens VDO Automotive S.A.S., 31036 Toulouse Cédex 01 (FR)
(72) Inventeur: LEFAURE, Philippe, F-31450 Montbrun (FR)
(86) Numéro de dépôt international: PCT/EP2002/006377
(87) Numéro de publication internationale: WO 2003/003043

(56) Documents cités:
- EP-A- 1 004 461
- WO-A-00/34062
- FR-A- 2 774 178
- US-A- 6 018 993

## Description

La présente invention concerne un procédé pour localiser un capteur associé à une roue d'un véhicule. Ce procédé permet par exemple de déterminer la position (avant, arrière, droite, gauche, ...) d'un capteur de pression monté dans un pneu de véhicule automobile.

Sur un véhicule équipé d'un système de surveillance de la pression des pneus, il est nécessaire de pouvoir identifier automatiquement la localisation d'un capteur de pression. Ainsi, lorsqu'une information concernant la pression d'un pneumatique est envoyée à une unité centrale, celle-ci peut savoir à quelle roue correspond l'information de pression reçue.

Les informations concernant la pression des pneus, dans un système de surveillance de pression des pneus, sont envoyées des capteurs situés au niveau des roues vers l'unité centrale par ondes radio. Une antenne fixe par rapport au châssis du véhicule reçoit l'information et la transmet. Certains systèmes de surveillance de pression des pneus prévoient une antenne par roue et donc par capteur de pression. Dans ce cas, l'identification de la roue se fait par filtrage. Pour une antenne donnée, le signal reçu le plus puissant correspond au capteur de pression le plus proche de l'antenne. La localisation de la roue et du capteur associé se fait donc de cette manière.

Toutefois, pour simplifier le système et le rendre plus économique, il est préférable de n'avoir qu'un seul récepteur. Lorsqu'un capteur de pression émet alors une information, il faut pouvoir déterminer à quelle roue est associé ce capteur. Pour un véhicule automobile comportant quatre roues, il faut déterminer si le capteur est associé à une roue avant ou à une roue arrière et également si l'information provient d'une roue localisée à droite ou à gauche du véhicule.

Le document FR 2 774 178 révèle un procédé de localisation et de reconnaissance de la position des roues sur un véhicule. Ici, les roues sont équipées chacune d'un capteur émettant un signal de détection représentatif d'un état de la roue correspondante. Le véhicule est quant à lui équipé d'un dispositif de traitement du signal de détection. Le procédé décrit dans ce document consiste à déterminer une signature d'un signal de détection émis par un capteur porté par une roue et à mémoriser cette signature et la position correspondante de la roue dans le dispositif de traitement. La reconnaissance de la position d'une roue est obtenue en analysant la signature d'un signal de détection et en comparant cette signature aux signatures mémorisées.

WO 00 34062 divulgue un procédé de localisation de capteurs montés sur les roues d'un véhicule, chaque capteur étant équipé d'un émetteur, comportant l'utilisation d'un récepteur et une ou deux antennes. La localisation des capteurs est réalisée en mesurant l'intensité de du champ reçu dans les antennes. Dans ce but, l'antenne ou les antennes sont disposées de telle sorte qu'aucune ne se trouve à équidistance des capteurs.

La présente invention a alors pour but de fournir un nouveau procédé de localisation automatique qui permette d'indiquer à quelle roue correspond un signal reçu avec un seul récepteur. Ce procédé pourra de préférence être mis en oeuvre avec des moyens d'un prix de revient peu élevé.

A cet effet, elle propose un procédé de localisation de capteurs montés chacun sur une roue de véhicule, chaque capteur étant équipé d'un émetteur et le véhicule étant équipé d'un récepteur correspondant destiné à recevoir les signaux émis par chaque capteur.

Selon l'invention, le récepteur est muni d'une antenne, disposée de telle sorte qu'elle ne se trouve pas à équidistance sensiblement de deux capteurs quelconques, et la localisation des capteurs est réalisée en analysant la puissance du champ reçu par le récepteur par l'intermédiaire de l'antenne pour chaque capteur, la puissance de champ reçu par l'antenne étant d'autant plus importante que le capteur ayant émis le signal correspondant est proche de l'antenne.

Ce procédé de localisation est basé sur le principe physique connu de l'atténuation d'un champ électromagnétique en fonction de la distance. Cette atténuation est proportionnelle à l'inverse du carré de la distance. Le procédé selon l'invention utilise ce principe physique. Ainsi pour une antenne donnée, le signal le plus puissant reçu correspond à l'émetteur, ici associé à chaque fois à un capteur, le plus proche et la puissance de réception décroît en fonction de la distance entre l'émetteur et le récepteur.

Il n'est pas nécessaire de connaître exactement la puissance du signal reçu. Il suffit de connaître la puissance relative des signaux correspondant aux différents capteurs. Il est possible pour estimer cette puissance de la mesurer électroniquement à l'aide par exemple d'un dispositif d'indication de puissance de type RSSI (Receiver Signal Strength Indicator pour indicateur de puissance du signal du récepteur). Une variante de cette mesure peut consister à faire varier la sensibilité du récepteur. Au fur et à mesure que cette sensibilité décroît, le nombre de signaux reçus décroît également. On en déduit alors l'éloignement relatif des capteurs, les capteurs les plus éteignes étant ceux dont on ne perçoit plus les signaux en premier.

Pour augmenter la fiabilité des résultats obtenus par ce procédé, l'invention propose aussi un procédé mettant en oeuvre deux antennes au moins. Il s'agit d'un procédé de localisation de capteurs montés chacun sur une roue de véhicule, chaque capteur étant équipé d'un émetteur et le véhicule étant équipé d'un récepteur correspondant destiné à recevoir les signaux émis par chaque capteur. Dans ce procédé, le récepteur est muni de deux antennes distinctes, distantes l'une de l'autre et disposées de telle sorte qu'aucune antenne ne se trouve à équidistance sensiblement des capteurs, les deux antennes se trouvant d'un même côté du véhicule, et la localisation des capteurs est réalisée en analysant la puissance du champ reçu par le récepteur par l'intermédiaire de chaque antenne pour chaque capteur, la puissance de champ reçu par une antenne étant d'autant plus importante que le capteur ayant émis le signal correspondant est proche de l'antenne.

Pour un véhicule comportant quatre roues, ce procédé selon l'invention comporte par exemple les étapes suivantes :
a) analyse de la puissance des signaux reçus par les deux antennes afin de distinguer les deux capteurs se trouvant du côté des antennes des deux autres capteurs, les signaux reçus en provenance de ces deux capteurs étant les moins atténués,
b) une antenne étant inactivée et l'autre étant activée, analyse de la puissance des signaux reçus des deux capteurs se trouvant du même côté que les antennes afin de déterminer quel capteur est le plus proche de l'antenne encore activée, et
c) une antenne étant inactivée et l'autre étant activée, analyse de la puissance des signaux reçus des deux capteurs se trouvant du côté opposé aux antennes afin de déterminer quel capteur est le plus proche de l'antenne encore activée.

Le fait de décomposer le procédé de localisation en plusieurs étapes successives permet d'augmenter la fiabilité des résultats obtenus.

L'étape a) du procédé ci-dessus est par exemple réalisée comme suit :
- ajustement du récepteur à une sensibilité prédéterminée pour recevoir tous les signaux émis par les quatre capteurs avec les deux antennes, et
- ajustement du récepteur à une sensibilité moindre de telle sorte que, pour les deux antennes, les signaux émis par les capteurs se trouvant du même côté que les antennes soient reçus tandis que les signaux émis par les autres capteurs ne soient pas reçus.

Dans ce procédé de localisation, à l'étape b) et/ou à l'étape c), l'analyse de puissance est par exemple réalisée en ajustant la sensibilité du récepteur de telle sorte que la puissance du signal reçu par le capteur à identifier et situé près de l'antenne inactive soit faible tandis que la puissance du signal reçu par le capteur à identifier et situé près de l'antenne active soit sensiblement plus forte. La sensibilité du récepteur peut alors être diminuée jusqu'à ce qu'un seul signal soit reçu. Ce signal correspond alors au signal émis par le capteur le plus proche. Il est ainsi possible de déterminer la position des deux capteurs dont les signaux sont analysés.

Dans le cas de l'étape b), les capteurs à identifier sont les capteurs situés du côté des antennes tandis que dans le cas de l'étape c), les capteurs à identifier sont les capteurs situés du côté opposé aux antennes.

Dans une autre forme de réalisation du procédé, à l'étape b) et/ou à l'étape c), l'analyse de puissance est par exemple réalisée en diminuant la sensibilité du récepteur jusqu'à ce qu'un seul signal émis par les capteurs à identifier soit encore reçu par le récepteur, et une déduction de la position des deux capteurs à identifier est ensuite réalisée.

A l'étape c), on reçoit bien entendu les signaux de tous les capteurs, y compris ceux situés du côté des antennes. Toutefois ces signaux sont déjà identifiés comme étant du côté des antennes par l'étape a) et on s'intéresse alors uniquement aux signaux reçus par les autres capteurs, c'est à dire ceux disposés du côté opposé aux antennes.

Pour augmenter la fiabilité du procédé de localisation décrit plus haut, l'étape b) et/ou c) est avantageusement réalisée deux fois de suite, une fois avec une première antenne active et la seconde antenne inactive et la seconde fois avec la première antenne inactive et la seconde antenne active, et une étape de corrélation est ensuite prévue pour comparer les résultats obtenus au cours de ces deux analyses.

De même, toujours dans un souci d'augmenter la fiabilité du procédé, l'étape c) est réalisée plusieurs fois de manière itérative et une analyse statistiques des résultats est effectuée. Ceci peut être généralisé à tout le procédé (avec une ou plusieurs antennes) qui est alors avantageusement réalisé de manière itérative et une analyse statistique des résultats alors obtenus est effectuée.

Dans une variante de réalisation, les deux antennes sont intégrées dans la planche de bord d'un véhicule, une antenne se trouvant dans la partie droite et l'autre dans la partie gauche de cette planche de bord. De cette manière, les deux antennes se trouvent à l'avant du véhicule, l'une à droite et l'autre à gauche. Dans cette variante, une antenne peut être intégrée à un boîtier électronique intégrant le récepteur tandis que l'autre antenne est par exemple une antenne externe à ce boîtier.

La présente invention concerne aussi un dispositif de localisation pour la mise en oeuvre d'un procédé tel que décrit ci-dessus, caractérisé en ce qu'il comporte un récepteur, deux antennes, un switch à deux voies d'entrée isolées l'une de l'autre et une sortie, monté de telle sorte que le récepteur est connecté à l'une ou à l'autre des antennes, ainsi qu'un calculateur pour la commande et la gestion du dispositif.

Dans une variante de réalisation de ce dispositif, le récepteur est intégré au calculateur. On peut également prévoir qu'une antenne est intégrée au calculateur et que l'autre antenne est une antenne externe.

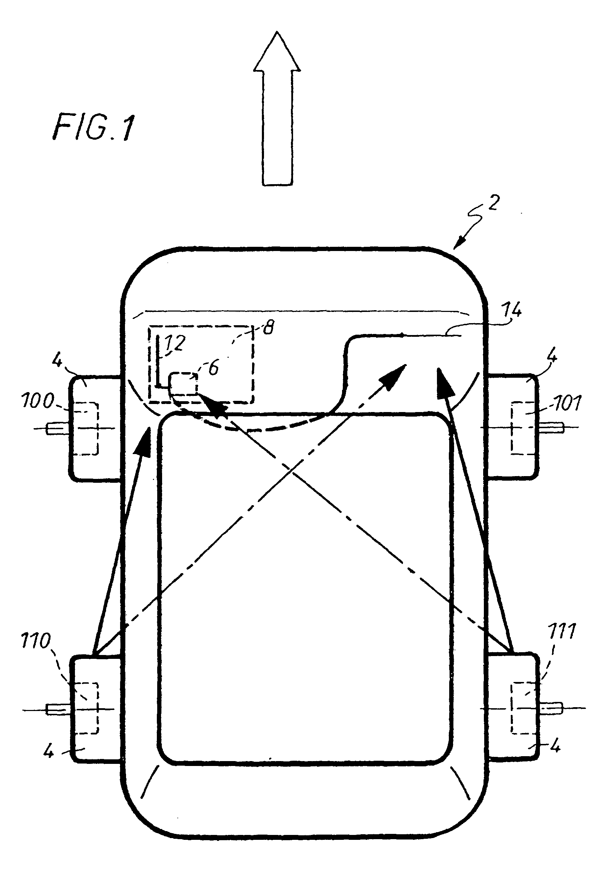

Les détails et avantages de l'invention ressortiront mieux de la description qui suit, faite en référence au dessin schématique annexé sur lequel :

L'unique figure représente schématiquement un véhicule en vue de dessus équipé d'un dispositif de localisation automatique de capteur selon l'invention.

Le procédé selon l'invention est destiné à être mis en oeuvre sur un véhicule automobile équipé de quatre roues, chacune de ces roues étant elle-même munie d'un capteur de pression. De façon connue en soi, chaque capteur de pression intègre un émetteur RF (Radio Fréquence). Le véhicule est quant à lui équipé d'un récepteur correspondant. De cette manière, les mesures effectuées par le capteur de pression peuvent être transmises à un calculateur qui analyse et interprète les données qu'il reçoit. Classiquement, la communication entre les capteurs et le récepteur s'effectue à l'aide de signaux d'une fréquence de 433 MHz.

Le procédé selon l'invention, décrit ci-après, permet au récepteur, lorsqu'il reçoit un signal d'un capteur, de savoir où se trouve ce capteur et ainsi détermine à quelle roue il doit associer l'information qu'il reçoit. En effet, chaque capteur, lorsqu'il émet un signal vers le récepteur, envoie un code l'identifiant ainsi que l'information à transmettre. Toutefois, comme les roues peuvent être interverties et changées de place (échange droite-gauche des pneus ou échange avant-arrière) la connaissance du code identifiant le capteur n'est pas suffisante pour savoir où se trouve ce capteur.

De façon originale, le procédé selon l'invention propose d'effectuer une localisation automatique des capteurs de pression montée sur les roues du véhicule en utilisant la propriété d'atténuation de puissance des ondes électromagnétiques lorsqu'elles se propagent.

Le système utilisé pour mettre en oeuvre ce procédé est représenté schématiquement sur l'unique figure annexée à la présente description.

Pour que ce système fonctionne, il faut qu'un véhicule 2, muni de quatre roues 4 soit équipé, au niveau de chaque pneumatique des roues 4, à chaque fois d'un capteur. On suppose dans la suite de la description qu'il s'agit ici de capteurs de pression mais on peut aussi concevoir des capteurs d'un autre type par exemple un capteur de température. Le véhicule 2 est alors muni de quatre capteurs : un capteur avant gauche portant la référence 100, un capteur avant droit portant la référence 101, un capteur arrière gauche portant la référence 110 et un capteur arrière droit portant la référence 111. Comme déjà indiqué plus haut, chacun de ces capteurs est équipé d'un émetteur RF.

Le véhicule 2 est quant à lui équipé d'un récepteur RF 6 unique destiné à recevoir les signaux émis par les quatre capteurs 100, 101, 110, 111. Ce récepteur 6 est intégré dans un calculateur 8 pilotable. Les signaux arrivant au récepteur 6 sont reçus par l'intermédiaire de deux antennes. Une première antenne 12 est une antenne intégrée au calculateur 8. Il s'agit par exemple d'une antenne imprimée sur un circuit de ce calculateur. La seconde antenne est une antenne externe 14 par exemple une antenne de type quart d'onde. Un switch présentant deux entrées et une sortie est intégrée dans le calculateur 8. Il permet de connecter le récepteur 6 soit à l'antenne interne 12 soit à l'antenne externe 14. Les deux voies d'entrée de ce switch sont isolées l'une de l'autre avec une isolation minimale de 30 dB. Le pilotage du switch est assuré par le calculateur 8.

Le récepteur possède une sensibilité ajustable par l'intermédiaire d'un dispositif de contrôle de gain. Il comporte également une sortie de type RSSI (Receiver Signal Strength Indicator ou indicateur de la puissance du signal du récepteur). Cette sortie permet l'analyse du niveau de champ reçu par les émetteurs associés aux capteurs 100, 101, 110, 111. Les fonctions de contrôle de gain et d'analyse de niveau de champ reçu sont également gérées par le calculateur 8 à l'aide d'un port analogique/numérique pour la sortie RSSI et d'un port logique pour le contrôle de gain.

On suppose ici que les quatre capteurs 100, 101, 110, 111 sont tous les quatre identiques. Comme déjà indiqué plus haut, l'émetteur associé à chacun de ces capteurs, lorsqu'il émet un signal RF, émet tout d'abord un code identifiant propre à chaque capteur. Les codes identifiants émis par les capteurs 100, 101, 110, 111 sont connus du calculateur 8. On peut par exemple supposer que les codes identifiants pour ces capteurs sont respectivement 100, 101, 110 et 111. Le calculateur 8 connaît ces codes mais ne sait pas où se trouvent géographiquement les capteurs correspondants. Tous les capteurs étant identiques, on suppose alors que la puissance émise par chacun de ces capteurs est quasiment du même ordre. On admet par exemple une tolérance dans cette puissance de plus ± 1dB.

On rappelle que l'atténuation de la puissance d'une onde électromagnétique transmise est soumise à une loi de décroissance proportionnelle au carré de la distance de l'émission.

Dans l'exemple représenté au dessin, le calculateur 8, et donc par conséquent l'antenne interne 12, est placé dans la partie gauche de la planche de bord du véhicule 2. L'antenne externe 14 est également placée au niveau de la planche de bord de ce véhicule mais dans la partie droite de celle-ci. Il importe ici qu'aucune de ces deux antennes ne soit sensiblement équidistante des quatre roues 4 ou des capteurs associés. Ici, les deux antennes 12, 14 sont disposées à l'avant du véhicule. Le procédé décrit ci-après fonctionnerait de façon semblable si les deux antennes se trouvaient à l'arrière du véhicule, sur le côté droit ou le côté gauche de celui-ci. Dans un souci de clarté, la description qui suit sera faite uniquement en référence au dessin annexé sans tenir compte des autres positions éventuelles des antennes 12 et 14.

Trois étapes successives sont proposées pour permettre la localisation des capteurs 100, 101, 110, 111. Dans une première étape, les capteurs avant et les capteurs arrière sont localisés. Dans l'étape suivante, le capteur avant droit est distingué du capteur avant gauche et dans la troisième étape enfin on propose de distinguer le capteur arrière droit du capteur arrière gauche. Une variante de réalisation préférée du procédé selon l'invention est décrite ci-après.

Tout d'abord, un bilan de puissance des quatre capteurs est effectué. Le récepteur 6 est alors ajusté à sensibilité maximale avec l'antenne interne 12 puis l'antenne externe 14. Le niveau de champ reçu est alors analysé et mémorisé. Le tableau ci-dessous résume le résultat du bilan de puissance effectué.

**Tableau 1**

| Identifiant Capteur | Antenne interne 12 Réception (niveau RSSI) | Antenne externe 14 Réception (niveau RSSI) |
|---|---|---|
| 100 | A0 | B0 |
| 101 | A1 | B1 |
| 110 | A2 | B2 |
| 111 | A3 | B3 |

Ai et Bi, i = 0 à 3, correspondent au niveau de puissance pour chaque signal reçu. Ce tableau, ou tout du moins les valeurs qu'il contient, est stocké dans la mémoire du calculateur 8.

Le contrôle de gain du récepteur 6 est ensuite ajusté à une valeur de gain pour laquelle les antennes interne 12 et externe 14 reçoivent les signaux émis par les capteurs 100, 101 avant mais ne reçoivent pas les signaux des capteurs 110, 111 arrière. Les niveaux de puissance des signaux reçus sont résumés dans le tableau ci-après.

**Tableau 2**

| Identifiant Capteur | Antenne interne Réception (niveau RSSI) | Antenne externe Réception (niveau RSSI) |
|---|---|---|
| 100 | C0 | D0 |
| 101 | C1 | D1 |
| 110 | (C2) | (D2) |
| 111 | (C3) | (D3) |

Les niveaux Ci, Di, i = 0 à 3 correspondent au niveau de puissance du champ correspondant au signal reçu par le récepteur. Les valeurs C2, C3, D2, D3 sont entre parenthèses pour indiquer qu'elles correspondent à un signal non reçu ou plutôt non détecté, par le récepteur 6. Les résultats résumés dans ce tableau sont également mémorisés dans le calculateur 8.

On détermine ainsi les capteurs qui sont placés à l'avant du véhicule et ceux placés à l'arrière du véhicule. Il est clair que les capteurs placés à l'avant du véhicule sont ceux pour lesquels un signal a été perçu lors de la mesure avec une sensibilité affaiblie.

Toutefois, les résultats de mesure contenus dans les tableaux ci-dessus montrent que l'on peut non seulement localiser les capteurs montés à l'avant et à l'arrière du véhicule mais aussi différencier les capteurs droit des capteurs gauche en analysant les valeurs Ai, Bi, Ci et Di mesurées.

En analysant les niveaux des signaux reçus, il est alors théoriquement possible de localiser les capteurs. En effet, pour une antenne donnée, le signal reçu avec le niveau de champ le plus élevé correspondra au signal émis par le capteur le plus proche de l'antenne. Les mesures faites avec les deux antennes permettent de corréler les résultats obtenus. Toutefois, les résultats obtenus ne sont pas toujours satisfaisants car il est parfois difficile, notamment pour les capteurs éloignés des antennes, de distinguer des signaux atténués, c'est-à-dire provenant d'un capteur relativement éloigné, et relativement faible. On prévoit, comme indiqué ci-dessus, les trois étapes pour réaliser la localisation.

La première étape consiste à effectuer les mesures résumées dans les deux tableaux ci-dessus. On obtient ainsi la distinction entre les capteurs 100, 101 avant et les capteurs 110, 111 arrière.

La seconde étape consiste alors à distinguer le capteur avant gauche 100 du capteur avant droit 101. On constate que la distance entre le capteur 100 monté dans la roue avant gauche et l'antenne interne 12 de réception implantée dans le calculateur 8 est relativement faible par rapport à la distance entre cette antenne interne 12 et le capteur 101 monté dans la roue avant droite. De même, la distance entre le capteur 101 monté dans la roue avant droite et l'antenne externe 14 est relativement faible par rapport à la distance entre cette antenne externe 14 et le capteur 100 monté dans la roue avant gauche.

Pour distinguer ces deux capteurs, on active par exemple tout d'abord l'antenne interne 12. La sensibilité du récepteur 6 est alors diminuée de telle sorte que l'on reçoive faiblement les signaux émis par le capteur 101 monté dans la roue avant droite alors que la puissance des signaux reçus par le capteur 100 monté dans la roue avant gauche est nettement plus forte. L'analyse des niveaux de puissance des champs correspondants aux signaux reçus permet d'établir assez facilement la position de chaque capteur (100 et 101). Une mesure réalisée avec une seule antenne est suffisante mais il est préférable de faire une corrélation en utilisant les deux antennes.

Ainsi, dans l'exemple donné, dans le tableau 2 si on a C0 << C1 et D1 << D0, le calculateur 8 en déduit que le capteur 100 est placé à l'avant gauche et que le capteur 101 est placé à l'avant droite.

Il convient alors de distinguer la roue arrière droite de la roue arrière gauche. Comme en ce qui concerne les roues avant, on constate que la distance entre le capteur 110 monté dans la roue arrière gauche et l'antenne interne 12 implantée dans le calculateur 8 est moins importante que la distance entre le capteur 111 implanté dans la roue arrière droite et cette même antenne. De même pour l'antenne externe 14, elle est plus proche de la roue arrière droite et donc du capteur 111 que de la roue arrière gauche et donc du capteur 110. En activant alors l'antenne interne 12, l'antenne externe 14 étant inactivée, lorsque la sensibilité du récepteur 6 est nominale ou diminuée, le capteur 110 monté dans la roue arrière gauche est reçu avec une puissance supérieure que le capteur 111 monté dans la roue arrière droite. inversement, avec l'antenne externe 14 activée et l'antenne interne 12 inactivée, le capteur 111 monté dans la roue arrière droite est reçu avec une puissance supérieure que le capteur 110 monté dans la roue arrière gauche. On a alors dans le tableau 1, A2 << A3 et B3 << B2. De même dans le tableau 2 on aura C2 << C3 et D3 << D2. On conclut alors que le capteur 110 est monté à l'arrière gauche tandis que le capteur 111 est monté à l'arrière droit.

Pour garantir les informations de localisation des capteurs 100, 101, 110, 111 montés sur les roues 4 du véhicule 2, le procédé décrit ci-dessus peut être réalisé plusieurs fois de suite. On peut alors effectuer une analyse statistique des résultats obtenus. Ceci permet de s'affranchir des incertitudes liées à l'utilisation de la technologie d'émission de signaux RF. Cette analyse statistique peut être faite pour la localisation des quatre capteurs ou bien uniquement pour la localisation des capteurs arrière qui sont les plus éloignés des antennes et donc pour lesquels l'incertitude sur les mesures est la plus grande.

La présente invention ne se limite pas aux procédés décrits ci-dessus à titre d'exemples non limitatifs ainsi qu'au système décrit pour la mise en oeuvre de ces procédés. Elle comprend également toutes les variantes de réalisation à la portée de l'homme du métier dans le cadre des revendications ci-après.

Ainsi, pour analyser la puissance des signaux reçus, au lieu de mesurer la puissance d'un signal reçu, on peut aussi jouer sur la sensibilité du récepteur. On peut par exemple partir de la sensibilité nominale de ce récepteur. Les signaux émis par les quatre capteurs sont alors reçus par le récepteur. En diminuant progressivement cette sensibilité, au lieu de recevoir les signaux des quatre capteurs on n'obtiendra plus que les signaux de trois capteurs, puis de deux puis d'un seul. On peut alors en déduire que le premier capteur dont les signaux ne sont plus reçus est le capteur le plus éloigné de l'antenne concernée, et que le capteur dont le signal est reçu même lorsque la sensibilité est très faible est le capteur le plus proche de l'antenne concerné. On peut ainsi déduire la position des quatre capteurs.

## Revendications

1. Procédé de localisation de capteurs (100, 101, 110, 111) montés chacun sur une roue (4) de véhicule, chaque capteur étant équipé d'un émetteur et le véhicule (2) étant équipé d'un récepteur (6) correspondant destiné à recevoir les signaux émis par chaque capteur (100, 101, 110, 111), le dit récepteur (6) étant muni de deux antennes (12, 14) distinctes, distantes l'une de l'autre et disposées de telle sorte qu'aucune antenne ne se trouve à équidistance sensiblement des capteurs (100, 101, 110, 111), les deux antennes (12, 14) se trouvant d'un même côté du véhicule, la localisation des capteurs (100, 101, 110, 111) étant réalisée en analysant la puissance du champ reçu par le récepteur (6) par l'intermédiaire de chaque antenne (12, 14) pour chaque capteur, la puissance de champ reçu par une antenne étant d'autant plus importante que le capteur ayant émis le signal correspondant est proche de l'antenne, le dit procédé étant **caractérisé en ce qu'**il comporte les étapes suivantes :
a) analyse de la puissance des signaux reçus par les deux antennes (12, 14) afin de distinguer les deux capteurs (100, 101) se trouvant du côté des antennes des deux autres capteurs (110, 111), les signaux reçus en provenance de ces deux capteurs étant les moins atténués,
b) une antenne étant inactivée et l'autre étant activée, analyse de la puissance des signaux reçus des deux capteurs (100, 101) se trouvant du même côté que les antennes afin de déterminer quel capteur est le plus proche de l'antenne encore activée,
c) une antenne étant inactivée et l'autre étant activée, analyse de la puissance des signaux reçus des deux capteurs (110, 111) se trouvant du côté opposé aux antennes (12, 14) afin de déterminer quel capteur est le plus proche de l'antenne encore activée.

2. Procédé de localisation selon la revendication 1, **caractérisé en ce que** l'étape a) est réalisée comme suit :
- ajustement du récepteur (6) à une sensibilité prédéterminée pour recevoir tous les signaux émis par les quatre capteurs (100, 101, 110, 111) avec les deux antennes (12, 14), et
- ajustement du récepteur (6) à une sensibilité moindre de telle sorte que, pour les deux antennes (12, 14), les signaux émis par les capteurs (100, 101) se trouvant du même côté que les antennes soient reçus tandis que les signaux émis par les autres capteurs (110, 111) ne soient pas reçus.

3. Procédé de localisation selon l'une des revendications 1 ou 2, **caractérisé en ce qu'**à l'étape b) et/ou à l'étape c), l'analyse de puissance est réalisée en ajustant la sensibilité du récepteur (6) de telle sorte que la puissance du signal reçu par le capteur à identifier et situé près de l'antenne inactive soit faible tandis que la puissance du signal reçu par le capteur à identifier et situé près de l'antenne active soit sensiblement plus forte, et **en ce que** l'analyse des niveaux de puissances reçues est faite afin de déterminer la position des deux capteurs dont les signaux sont analysés.

4. Procédé de localisation selon l'une des revendications 1 ou 2, **caractérisé en ce qu'**à l'étape b) et/ou à l'étape c), l'analyse de puissance est réalisée en diminuant la sensibilité du récepteur (6) jusqu'à ce qu'un seul signal émis par les capteurs à identifier soit encore reçu par le récepteur (6), et **en ce qu'**une déduction de la position des deux capteurs à identifier est ensuite réalisée.

5. Procédé de localisation selon l'une des revendications 1 à 4, **caractérisé en ce que** l'étape b) et/ou c) est réalisée deux fois de suite, une fois avec une première antenne active et la seconde antenne inactive et la seconde fois avec la première antenne inactive et la seconde antenne active, et **en ce qu'**une étape de corrélation est prévue pour comparer les résultats obtenus au cours de ces deux analyses.

6. Procédé de localisation selon l'une des revendications 1 à 5, **caractérisé en ce que** l'étape c) est réalisée plusieurs fois de manière itérative et **en ce qu'**une analyse statistiques des résultats est effectuée.

7. Procédé de localisation selon l'une des revendications 1 à 6, **caractérisé en ce que** les deux antennes (12, 14) sont intégrées dans la planche de bord d'un véhicule, une antenne se trouvant dans la partie droite et l'autre dans la partie gauche de cette planche de bord.

8. Procédé de localisation selon la revendication 7, **caractérisé en ce qu'**une antenne (12) est intégrée à un boîtier électronique intégrant le récepteur (6) tandis que l'autre antenne (14) est une antenne exteme à ce boîtier.

9. Procédé de localisation selon l'une des revendications 1 à 6, **caractérisé en ce qu'**il est réalisé plusieurs fois de manière itérative et **en ce qu'**une analyse statistique des résultats est effectuée.

## Patentansprüche

1. Verfahren zum Orten von Aufnehmern (100, 101, 110, 111), die jeweils an einem Fahrzeugrad (4) angebracht sind, wobei jeder Aufnehmer mit einem Sender versehen ist und das Fahrzeug (2) mit einem entsprechenden Empfänger (6) für den Empfang der von jedem Aufnehmer (100, 101, 110, 111) abgegebenen Signale versehen ist, der Empfänger (6) mit zwei getrennten Antennen (12, 14) versehen ist, die zueinander beabstandet und so angeordnet sind, dass die Antennen nicht im wesentlichen den gleichen Abstand zu den Aufnehmern (100, 101, 110, 111) haben, die beiden Antennen (12, 14) sich auf einer gleichen Seite des Fahrzeugs befinden, die Ortung der Aufnehmer (100, 101, 110, 111) durchgeführt wird, indem die Stärke des Feldes analysiert wird, das von dem Empfänger (6) über jede Antenne (12, 14) für jeden Aufnehmer empfangen wird, die Stärke des von einer Antenne empfangenen Feldes umso stärker ist, je näher der Aufnehmer, der das entsprechende Signal abgegeben hat, sich zu der Antenne befindet, wobei das Verfahren **dadurch gekennzeichnet ist, dass** es die folgenden drei Schritte aufweist:
a) Analyse der Stärke der von den beiden Antennen (12, 14) empfangenen Signale, um die beiden Aufnehmer (100, 101), die sich auf der Seite der Antennen befinden, von den beiden anderen Aufnehmern (110, 111) zu unterscheiden, wobei die von diesen beiden Aufnehmern kommenden empfangenen Signale die am wenigsten gedämpften Signale sind,
b) Analyse, bei einer inaktiven Antenne und der anderen aktivierten Antenne, der Stärke der empfangenen Signale der beiden Aufnehmer (100, 101), die sich auf derselben Seite wie die Antennen befinden, um zu bestimmen, welcher Aufnehmer der zu der noch aktivierten Antenne am nächsten liegende Aufnehmer ist,
c) Analyse, bei einer inaktiven Antenne und der anderen aktivierten Antenne, der Stärke der empfangenen Signale der beiden Aufnehmer (110, 111), die sich auf der zu den Antennen (12, 14) gegenüberliegenden Seite befinden, um zu bestimmen, welcher Aufnehmer der zu der noch aktivierten Antenne am nächsten liegende Aufnehmer ist.

2. Verfahren zum Orten nach Anspruch 1, **dadurch gekennzeichnet, dass** der Schritt a) wie folgt durchgeführt wird:
- Einstellen des Empfängers (6) auf eine vorgegebene Empfindlichkeit, um die von den vier Aufnehmern (100, 101, 110, 111) abgegebenen sämtlichen Signale mit den beiden Antennen (12, 14) zu empfangen, und
- Einstellen des Empfängers (6) auf eine geringere Empfindlichkeit derart, dass für die beiden Antennen (12, 14) die Signale, die von den Aufnehmern (100, 101) abgegeben wurden, welche sich auf der gleichen Seite wie die Antennen befinden, empfangen werden, während die Signale, die von den anderen Aufnehmern (110, 111) abgegeben wurden, nicht empfangen werden.

3. Verfahren zum Orten nach Anspruch 1 oder 2, **dadurch gekennzeichnet, dass** bei dem Schritt b) und/oder dem Schritt c) die Analyse der Signalstärke durchgeführt wird, indem die Empfindlichkeit des Empfängers (6) derart verstellt wird, dass die Stärke des empfangenen Signals des Aufnehmers, welcher zu identifizieren ist und der inaktiven Antenne am nächsten ist, schwach ist, während die Stärke des empfangenen Signals des Aufnehmers, der zu identifizieren ist und der aktiven Antenne am nächsten ist, wesentlich stärker ist, und dass die Analyse der Pegel der empfangenen Signalstärken durchgeführt wird, um den Ort der beiden Aufnehmer, deren Signale analysiert werden, zu bestimmen.

4. Verfahren zum Orten nach Anspruch 1 oder 2, **dadurch gekennzeichnet, dass** bei dem Schritt b) und/oder bei dem Schritt c) die Analyse der Signalstärke durchgeführt wird, indem die Empfindlichkeit des Empfängers (6) verringert wird, bis nur ein einziges Signal, das von den zu identifizierenden Aufnehmern abgegeben wurde, noch von dem Empfänger (6) empfangen wird, und dass eine Ableitung des Ortes der beiden zu identifizierenden Aufnehmer anschließend erfolgt.

5. Verfahren zum Orten nach einem der Ansprüche 1 bis 4, **dadurch gekennzeichnet, dass** der Schritt b) und/oder c) zweimal in Folge durchgeführt wird, einmal mit einer aktiven ersten Antenne und einer inaktiven zweiten Antenne, und das zweite Mal mit der inaktiven ersten Antenne und der aktiven zweiten Antenne, und dass ein Korrelationsschritt vorgesehen ist, um die bei den beiden Analysen erhaltenen Ergebnisse zu vergleichen.

6. Verfahren zum Orten nach einem der Ansprüche 1 bis 5, **dadurch gekennzeichnet, dass** der Schritt c) mehrmals auf iterative Weise durchgeführt wird und dass eine statistische Analyse der Ergebnisse vorgenommen wird.

7. Verfahren zum Orten nach einem der Ansprüche 1 bis 6, **dadurch gekennzeichnet, dass** die beiden Antennen (12, 14) in das Armaturenbrett eines Fahrzeugs integriert sind, wobei sich eine Antenne im rechten Teil und die andere Antenne im linken Teil des Armaturenbrettes befindet.

8. Verfahren zum Orten nach Anspruch 7, **dadurch gekennzeichnet, dass** eine Antenne (12) in eine den Empfänger (6) enthaltende Elektronikbox integriert ist, während die andere Antenne (14) eine außerhalb dieser Elektronikbox angeordnete Antenne ist.

9. Verfahren zum Orten nach einem der Ansprüche 1 bis 6, **dadurch gekennzeichnet, dass** es mehrmals auf iterative Weise durchgeführt wird und dass eine statistische Analyse der Ergebnisse vorgenommen wird.

## Claims

1. A method for locating sensors (100, 101, 110, 111), each being mounted on a vehicle wheel (4), each sensor being fitted with an emitter and the vehicle (2) being fitted with a corresponding receiver (6) for receiving the signals emitted by each sensor (100, 101, 110, 111), said receiver (6) being fitted with two separate antennas (12, 14), placed apart from each other and positioned such that neither antenna is noticeably equidistant from any of the sensors (100, 101, 110, 111), the two antennas (12, 14) being positioned on the same side of the vehicle, location of the sensors (100, 101, 110, 111) being carried out by analysing the strength of the field received by the receiver (6) via each antenna (12, 14) for each sensor, the strength of the field received by an antenna being stronger the nearer the sensor that has emitted the corresponding signal is to the antenna, said procedure being **characterised in that** it comprises the following steps:
a) analysis of the strength of the signals received by the two antennas (12, 14) in order to distinguish the two sensors (100, 101) positioned on the side of the antennas from the other two sensors (110, 111), the signals received from these two sensors being less attenuated,
b) one antenna being inactive and the other being active, analysis of the strength of the signals received from the two sensors (100, 101) positioned on the same side as the antennas in order to determine which sensor is nearer to the active antenna,
c) one antenna being inactive and the other being active, analysis of the strength of the signals received from the two sensors (110, 111) positioned on the opposite side to the antennas (12, 14) in order to determine which sensor is nearer to the active antenna.

2. A locating method according to Claim 1, **characterised in that** step a) is carried out as follows:
- adjustment of the receiver (6) to a predetermined sensitivity to receive all the signals emitted by the four sensors (100, 101, 110, 111) with the two antennas (12, 14) and
- adjustment of the receiver (6) to a lower sensitivity such that for the two antennas (12, 14), the signals emitted by the sensors (100, 101) positioned on the same side as the antennas are received whilst the signals emitted by the other sensors (110, 111) are not received.

3. A locating method according to one of Claims 1 or 2, **characterised in that** in step b) and/or step c), the analysis of strength is carried out by adjusting the sensitivity of the receiver (6) such that the strength of the signal received by the sensor to be identified and positioned in the proximity of the inactive antenna is weak while the strength of the signal received by the sensor to be identified and positioned in the proximity of the active antenna is noticeably stronger, and **in that** the analysis of strength levels of signals received is carried out in order to determine the position of the two sensors whose signals are analysed.

4. A locating method according to one of Claims 1 or 2, **characterised in that** at step b) and/or c), the analysis of strength is carried out by reducing the sensitivity of the receiver (6) until only one signal emitted by the sensors to be identified is still received by the receiver (6), and **in that** the position of these two sensors to be identified is then deduced.

5. A locating method according to one of Claims 1 to 4, **characterised in that** step b) and/or c) is carried out twice consecutively, once with a first antenna active and the second antenna inactive and the second time with the first antenna inactive and the second antenna active, and **in that** a correlation step is provided in order to compare the results obtained during these two analyses.

6. A locating method according to one of Claims 1 to 5, **characterised in that** step c) is performed several times repeatedly and **in that** a statistical analysis of the results is carried out.

7. A locating method according to one of Claims 1 to 6, **characterised in that** the two antennas (12, 14) are integrated in the instrument panel of a vehicle, one antenna being in the right side and the other in the left side of said instrument panel.

8. A locating method according to Claim 7, **characterised in that** one antenna (12) is integrated into an electronic box holding the receiver (6) while the other antenna (14) is external to said box.

9. A locating method according to one of Claims 1 to 6, **characterised in that** it is performed several times repeatedly and **in that** a statistical analysis of the results is carried out.
